**Europäisches Patentamt**

**European Patent Office**

**Office européen des brevets**

(11) Veröffentlichungsnummer : **0 144 546
B1**

# EUROPÄISCHE PATENTSCHRIFT

(45) Veröffentlichungstag der Patentschrift :
04.05.88

(51) Int. Cl.⁴ : **G 01 B 11/03**

(21) Anmeldenummer : **84110213.0**

(22) Anmeldetag : **28.08.84**

(54) **Mehrkoordinaten-Messmaschine.**

(30) Priorität : **23.09.83 DE 3334460**

(43) Veröffentlichungstag der Anmeldung :
**19.06.85 Patentblatt 85/25**

(45) Bekanntmachung des Hinweises auf die Patenterteilung : **04.05.88 Patentblatt 88/18**

(84) Benannte Vertragsstaaten :
**CH DE FR GB IT LI SE**

(56) Entgegenhaltungen :
**DE-A- 2 441 984
US-A- 3 815 996
US-A- 4 153 370
Die Akte enthält technische Angaben, die nach dem Eingang der Anmeldung eingereicht wurden und die nicht in dieser Patentschrift enthalten sind.**

(73) Patentinhaber : **Firma Carl Zeiss**

**D-7920 Heidenheim (Brenz) (DE)
CH DE FR GB IT LI SE
CARL-ZEISS-STIFTUNG trading as CARL ZEISS**

**D-7920 Heidenheim (Brenz) (DE)
GB**

(72) Erfinder : **Kunzmann, Horst, Prof. Dr.
Billrothstrasse 6
D-3300 Braunschweig (DE)**
Erfinder : **Schepperle, Karl, Dipl.-Ing.
Herschelstrasse 20
D-7082 Oberkochen (DE)**
Erfinder : **Trieb, Gerhard, Ing. grad.
Ulmenweg 10
D-7923 Königsbronn (DE)**

## Beschreibung

Die Erfindung betrifft eine Mehrkoordinaten-Meßmaschine mit interferometrischer Erfassung des Verschiebeweges in den Meßachsen.

Solche Maschinen besitzen in der Regel drei separate an die verfahrbaren Meßachsen X, Y und Z angebaute Laserinterferometer bestehend aus je einem Laser, der Interferometeroptik und den photoelektrischen Detektoren zur Zählung der Streifen bzw. Ringe des Interferenzmusters. In der internationalen Patentanmeldung Veröffentlichungs Nr. WO 81/02627 ist beispielsweise eine Meßmaschine mit dem genannten Aufbau beschrieben. Nachteilig ist bei dieser Maschine der relativ hohe Aufwand, bedingt durch die drei separaten Lasergeneratoren, die an die beweglichen Maschinenteile angebaut sind.

Aus der DE-C-21 09 954 ist es bereits bekannt, die drei Achsen einer Bearbeitungsmaschine durch Hintereinanderschaltung der drei Meßstrekken in ein einziges interferometrisches Längenmeßsystem zu integrieren. Der Nachteil dieser Lösung besteht darin, daß die Maschine jeweils nur in einer Achse verfahren werden kann und die beiden anderen Achsen während der Messung des Verfahrweges stillstehen müssen.

In der DE-A1-32 01 007 und der US-A-38 15 996 sind mehrachsige interferometrische Meßgeräte beschrieben, deren Meßstrahlen für die drei Verschiebeachsen durch Strahlteilung und Umlenkung aus einer einzigen Strahlungsquelle erzeugt werden. Bei der Versorgung der oftmals weit voneinander entfernten Interferometer der einzelnen Meßachsen von einer einzigen Strahlungsquelle aus treten jedoch Schwierigkeiten auf, da Vibrationen, Verkippungen der verfahrbaren Maschinenteile etc. die Übertragung des Laserstrahls stören. Um den zu begegnen ist ein relativ hoher Aufwand bei der optisch-mechanischen Auslegung der Übertragungskanäle nötig. So sind eine ganze Reihe exakt bearbeiteter Tripel-Prismen zur Faltung des Strahlenganges, eine Abschirmung des Übertragungskanals gegen Schmutz und Fremdlicht etc. erforderlich.

Die Aufgabe der vorliegenden Erfindung ist es, diesen Aufwand zu verringern und eine möglichst einfach aufgebaute Meßmaschine mit interferometrischer Erfassung des Verschiebeweges in den Meßachsen zu schaffen.

Diese Aufgabe wird durch die im Kennzeichen des Anspruchs 1 angegebenen Maßnahmen gelöst.

Zwar ist es aus der EP-A-64 789, der WO-A-82/04310 und der WO-A-82/04311 sowie der US-C-41 53 370 bekannt, Faseroptiken in interferometrische Längenmeßsysteme zu integrieren. Dort bilden die verwendeten Glasfasern jedoch jeweils einen Teil der interferometrischen Meßstrecke und es ist daher ein mehrfaches Ein- und Auskoppeln des Meßstrahls in die Fasern erforderlich, was zu Intensitätsverlusten führt.

Der Vorteil der Erfindung ist darin zu sehen, daß alle drei Interferometer in den Meßachsen der Mehrkoordinaten-Meßmaschine mit einem Minimum an Aufwand von einem einzigen Lasergenerator versorgt werden können. Auch bereits mit herkömmlichen photoelektrischen Gittermeßsystemen ausgerüstete Maschinen können nachträglich leicht auf interferometrische Meßwerterfassung umgerüstet werden, da die Lichtleiter zur Versorgung der Interferometersysteme in die bereits vorhandenen elektrischen Kabelbäume der Maschine eingelegt werden können. Der Laser selbst kann beliebig weit entfernt von den Meßachsen der Maschine, beispielsweise im Maschinenbett, aufgestellt werden, wo er nicht stört.

Es ist vorteilhaft als Lichtleiter Monomodefasern mit elliptischem Querschnitt zu verwenden, da in diesen Fasern geführtes Licht hinsichtlich seiner Polarisationsrichtung unempfindlich gegenüber mechanischen Störeinflüssen ist. Derartige geeignete Fasern sind handelsüblich und beispielsweise in der US-C-43 07 938 oder der DE-C2-27 35 312 beschrieben.

Weitere Ausgestaltungen der Erfindung werden nachstehend anhand der Fig. 1-3 der beigefügten Zeichnungen beschrieben und in ihren Vorteilen erläutert :

Fig. 1 ist eine Skizze der in einer Meßmaschine gemäß der Erfindung verwendeten Optik ;

Fig. 2 ist eine perspektivische Darstellung einer mit der Optik aus Fig. 1 ausgerüsteten Meßmaschine.

Fig. 3 ist eine Teil-Skizze eines leicht abgewandelten Ausführungsbeispiels der Optik aus Fig. 1.

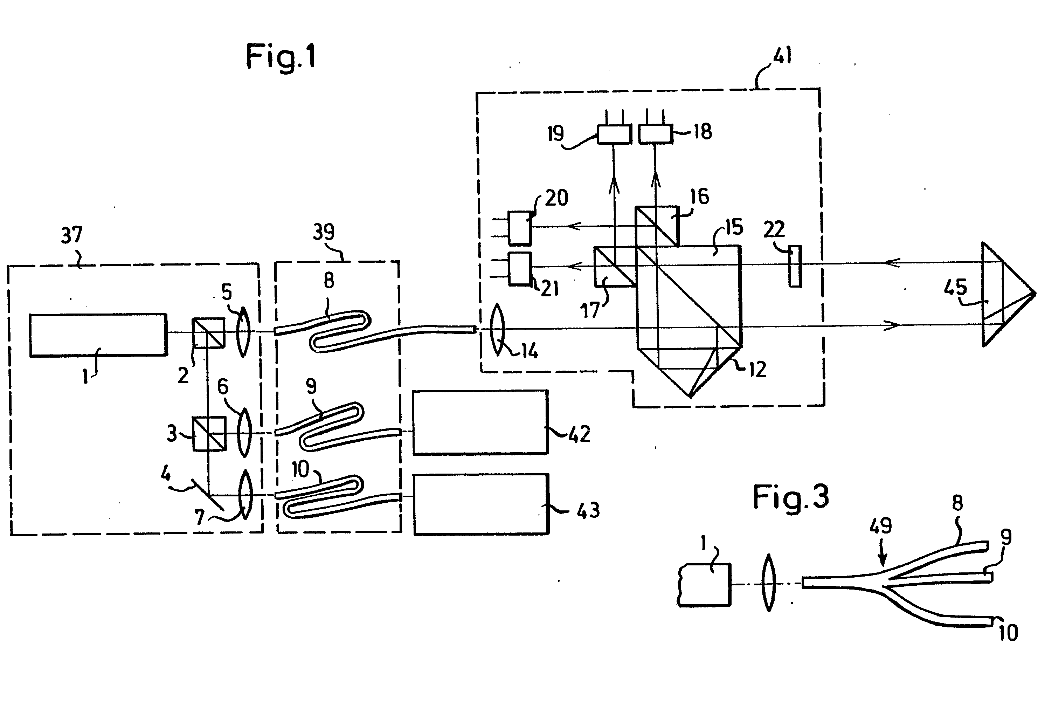

In dem in Fig. 1 dargestellten optischen System ist mit 1 ein Lasergenerator bezeichnet, dessen Nutzstrahl mit Hilfe zweier Strahlteiler 2 und 3 in drei intensitätsgleiche Teilstrahlen aufgespalten wird. Ein Vollspiegel 4 dient zur Umlenkung des durch den Strahlteiler 3 hindurchtretenden Teilstrahls.

Auf die Strahlteiler 2 und 3 bzw. den Vollspiegel 4 folgen drei Optiken 5, 6 und 7, die die drei Teilstrahlen in je einem Lichtleiter 8, 9 bzw. 10 einkoppeln. Bei diesen Optiken 8, 9 und 10 kann es sich beispielsweise um Einzellinsen handeln, in deren Brennpunkten die polierten Enden der jeweiligen Lichtleiter 8, 9 und 10 angeordnet sind.

Jeden der drei Lichtleiter 8-10 versorgt eines von drei interferometrischen Längenmeßsystemen 41, 42 und 43 mit Strahlung des Lasers 1.

Natürlich ist es auch möglich die Strahlteilung mit Hilfe eines faseroptischen Tapers 49 vorzunehmen, wie dies in Fig. 3 dargestellt ist.

Die drei Interferometer 41, 42 und 43 besitzen in diesem Ausführungsbeispiel jeweils genau den gleichen Aufbau. Der Einfachheit halber ist jedoch lediglich das von dem Lichtleiter 8 versorgte Interferometersystem 41 detailliert dargestellt.

Es besteht aus einem Strahlteilerwürfel 15, der den vom Ende des Lichtleiters 8 ausgehenden und von der Linse 14 kollimierten Strahl in einen Meß- und einen Referenzstrahl teilt. Beide Strahlen werden von je einem Tripelspiegel 12 bzw. 45 parallel versetzt reflektiert. Der dem Referenzstrahl zugeordnete Tripelspiegel 12 ist direkt auf den Strahlteiler 15 aufgekittet und im Meßstrahlengang ist eine sogenannte λ/4-Platte 22 angeordnet.

An den beiden Ausgängen des Interferometers ist je ein polarisierender Strahlteiler 16 bzw. 17 angeordnet. Diese Strahlteiler 16 und 17 zerlegen die beiden nach Interferenz an der Kittschicht des Würfels 15 erzeugten Teilstrahlen in ihre linear polarisierten Komponenten. Den Ausgängen der beiden Strahlteiler 16 und 17 sind je zwei photoelektrische Detektoren 18 und 19 bzw. 20 und 21 nachgeordnet, mit deren Hilfe die Interferenzstreifen gezählt werden.

Da das beschriebene Interferometer die Beibehaltung einer vorgegebenen Polarisationsrichtung des einfallenden Strahls erfordert, sind für die Lichtleiter 8, 9 und 10 Monomodefasern mit elliptischem Kernquerschnitt verwendet worden.

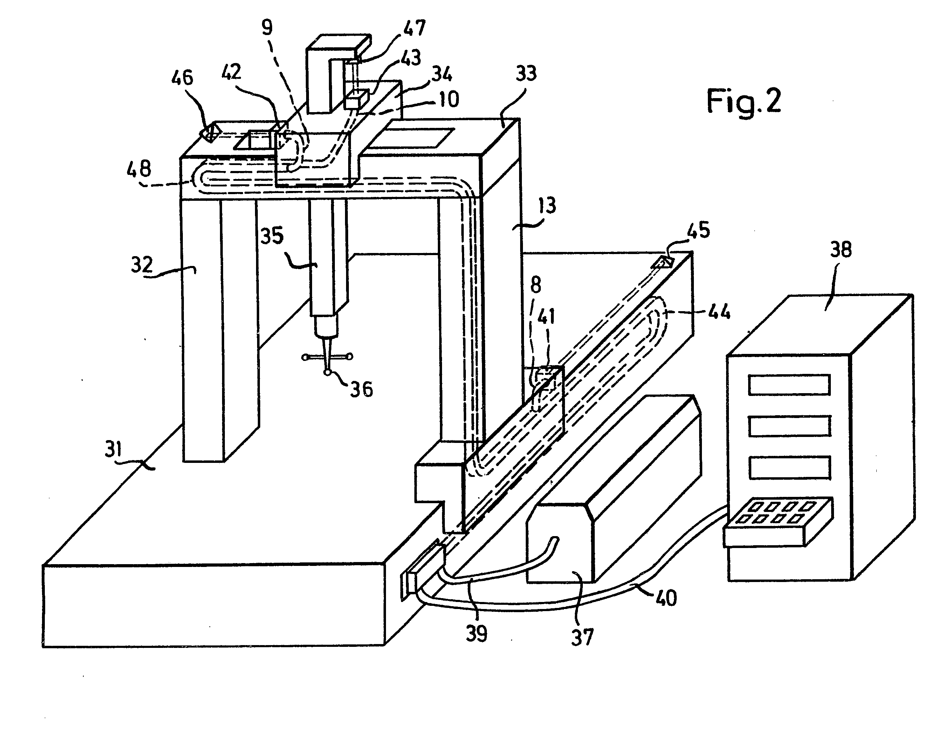

In Fig. 2 ist beispielhaft dargestellt, wie das vorstehend beschriebene optische System in die Meßachsen einer Dreikoordinaten-Meßmaschine integriert ist. Bei der dargestellten Meßmaschine handelt es sich um eine vom Portaltyp, bestehend aus der Grundplatte 31 z. B. aus Granit, auf der das aus den beiden Säulen 13 und 32 und dem darauf aufgelegten Querträger 33 bestehende Portal über Luftlager gleitet. Am Querträger 33 ist der senkrecht zur Verschieberichtung des Portals verfahrbare Schlitten 34 geführt, der seinerseits die in der Vertikalen verschiebbare Pinole 35 mit dem Tastkopf 36 trägt.

Jeder Meßachse der Meßmaschine ist ein interferometrisches Längenmeßsystem zugeordnet. Der Interferometerkopf 41 mißt in Verbindung mit dem Reflektor 45 die Verschiebung des Portals, der Interferometerkopf 42 mißt die Verschiebung des Querschlittens 34 gegen den Reflektor 46 und der dritte Interferometerkopf 43 mißt die Verschiebung des an der Pinole 35 befestigten Reflektors 47.

Die Netzteile zur Versorgung der Antriebe der Meßmaschine, die Elektronik zur deren Steuerung und die Elektronik für die Verarbeitung und Anzeige der Meßergebnisse sind in einem Steuerschrank 38 untergebracht, der über ein Kabel 40 mit der Meßmaschine verbunden ist. Dieses Kabel 40 mündet in einem Kabelbaum in der Maschine, der unter Verwendung flexibel armierter Bögen 44 und 48 durch das Innere der beweglichen Maschinenteile hindurchgeschleift ist. In den gleichen Kabelbaum münden auch die zu einem Glasfaserkabel 39 zusammengefaßten Lichtleiter 8, 9 und 10, mit denen die Interferometerköpfe 41, 42 und 43 versorgt werden. Der Lasergenerator 1 sowie die Optik 2-7 zur Strahlteilung und Einkopplung in die Lichtleiter 8-10 sind zusammen in einem Gehäuse 37 untergebracht.

Im vorstehend beschriebenen Ausführungsbeispiel enthält zwar jede Meßachse zwar nur ein einziges Interferometer zur Messung des Verschiebeweges, es ist jedoch ohne weiteres möglich mehrere Interferometer, auch unterschiedlicher optischer Bauart, pro Meßachse über entsprechend zusätzliche Lichtleiter vom Lasergenerator 1 aus zu versorgen, wenn mit Hilfe dieser zusätzlichen Interferometer beispielsweise Verdrehungen oder Verkippungen des betreffenden Maschinenteils mit erfaßt werden sollen.

**Patentansprüche**

1. Mehrkoordinaten-Meßmaschine mit mehreren unabhängigen interferometrischen Längenmeßsystemen zur Erfassung von Verschiebungen, Verdrehungen oder Verkippungen von Maschinenteilen, wobei jedes Längenmeßsystem jeweils mindestens einen kompletten Interferometerkopf mit einem Strahlteiler, Referenzspiegel und photoelektrischen Detektor umfaßt und die Interferometerköpfe von mindestens einem ortsfesten Lasergenerator aus mit Laserstrahlung versorgt werden, dadurch gekennzeichnet, daß jeder Interferometerkopf (41, 42, 43) die Beibehaltung einer vorgegebenen Polarisationsrichtung des einfallenden Strahles erfordert und für die Versorgung der Interferometerköpfe mit der Laserstrahlung Monomodefasern (8, 9, 10) mit elliptischem Querschnitt zwischen dem Lasergenerator oder den Lasergeneratoren (1) und den Interferometerköpfen angeordnet sind.

2. Mehrkoordinaten-Meßmaschine nach Anspruch 1, dadurch gekennzeichnet, daß zur Verteilung der Laserstrahlung auf die Monomodefasern (8, 9, 10) Strahlteiler (2, 3) zwischen dem Lasergenerator und den jeweiligen Optiken (5, 6, 7) zur Fokussierung der Teilbündel auf die Enden der Monomodefasern (8, 9, 10) angeordnet sind.

3. Mehrkoordinaten-Meßmaschine nach Anspruch 1, dadurch gekennzeichnet, daß zur Verteilung auf die Monomodefasern (8, 9, 10) ein faseroptischer Koppler (49) vorgesehen ist.

4. Mehrkoordinaten-Meßmaschine nach einem der Ansprüche 1-3, dadurch gekennzeichnet, daß die Monomodefasern (8-10) mit den Signal- bzw. Versorgungsleitungen der Detektoren (18-21) mindestens teilweise zu einem gemeinsamen Kabelbaum zusammengefaßt sind.

**Claims**

1. A Multi-coordinate measuring machine with several independent interferometric length-measuring systems for the detection of displacements, rotations or tilts of machine components, with each length-measuring system comprising at least one complete interferometer head with beam splitter, reference mirror and photoelectric detector, whereby the interferometer heads are supplied with laser radiation by at least one stationary laser generator, characterized by the fact that each interferometer head (41, 42, 43) requires a given direction of polarisation of the incident beam to be maintained, and that for the supply of the interferometer heads with laser radiation, monomode fibres (8, 9, 10) with elliptical cross sections are provided between the laser generators (1) and the interferometer heads.

2. A Multi-coordinate measuring machine according to claim 1, characterized by the fact that for the distribution of the laser radiation to the monomode fibres (8, 9, 10) beam splitters (2, 3) are provided between the laser generator and the respective optics (5, 6, 7) for focusing the partial beams on the ends of the monomode fibres (8, 9, 10).

3. A Multi-coordinate measuring machine according to claim 1, characterized by the fact that a fibre-optic coupler (49) is provided for the distribution to the monomode fibres (8, 9, 10).

4. A Multi-coordinate measuring machine according to one of the claims 1-3, characterized by the fact that the monomode fibres (8-10) are combined at least in parts to one common cable harness with the signal and supply lines of the detectors (18-21).

**Revendications**

1. Machine de mesure selon plusieurs coordonnées, comportant plusieurs systèmes interférométriques indépendants de mesure de longueur pour déterminer des déplacements, des rotations ou des basculements de parties de machine, chaque système de mesure de longueur possédant au moins une tête d'interféromètre complète avec un séparateur de faisceau, un miroir de référence et un détecteur photoélectrique et les têtes d'interféromètres étant alimentées en rayonnement laser à partir d'au moins un générateur laser stationnaire, caractérisée en ce que chaque tête d'interféromètre (41, 42, 43) exige la conservation d'une direction de polarisation du faisceau incident et que, pour l'alimentation des têtes d'interféromètres avec le rayonnement laser, des fibres monomodes (8, 9, 10) à section droite elliptique sont disposées entre le générateur laser ou les générateurs lasers (1) et les têtes d'interféromètres.

2. Machine selon la revendication 1, caractérisée en ce que, pour la répartition du rayonnement laser sur les fibres monomodes (8, 9, 10), des séparateurs de faisceau (2, 3) sont disposés entre le générateur laser et les optiques (5, 6, 7) correspondantes pour la focalisation des faisceaux partiels sur les extrémités des fibres monomodes (8, 9, 10).

3. Machine selon la revendication 1, caractérisée en ce qu'un coupleur (49) de l'optique des fibres est prévu pour la répartition du rayonnement laser sur les fibres monomodes (8, 9, 10).

4. Machine selon une des revendications 1-3, caractérisée en ce que les fibres monomodes (8-10) sont assemblées au moins partiellement en un harnais de câbles ensemble avec les canalisations de signalisation respectivement d'alimentation des détecteurs (18-21).

0 144 546

Fig.1

Fig.3

Fig.2

0 144 546